# FASCICULE DE BREVET EUROPEEN

(11) **EP 0 770 735 B1**
(45) Date de publication et mention de la délivrance du brevet: **08.05.2002**
(21) Numéro de dépôt: 96402269.3
(22) Date de dépôt: 24.10.1996
(51) Int. Cl.: E03F 5/10, E03F 1/00, B01D 24/26

(54) **Bassin tampon enterré de stockage et de traitement des eaux pluviales**
Unterirdischer Pufferbehälter zum Lagern und Behandeln von Regenwasser
Underground buffer tank for storing and treating rain water

(30) Priorité: 25.10.1995 FR 9512679
(43) Date de publication de la demande: 02.05.1997
(73) Titulaire: REDCO N.V., 1880 Kapelle op den Bos (BE)
(72) Inventeur: Filippi, Richard, 78590 Noisy le Roi (FR)
(74) Mandataire: Armengaud Ainé, Alain

(56) Documents cités:
- EP-A- 0 082 883
- WO-A-88/02422
- WO-A-93/07345
- CH-A- 683 851
- DE-A- 4 226 660
- DE-A- 4 407 353
- FR-A- 991 055

## Description

L'invention concerne un bassin tampon enterré de stockage et de traitement des eaux pluviales dont la partie supérieure est capable de supporter une charge, et qui est raccordé à un réseau d'amenée et d'évacuation des eaux. Elle constitue un perfectionnement apportés aux bassins décrits dans FR-A-2 604 737 et EP-A- 0286 662.

Selon cet état antérieur de la technique, pour réaliser des bassins tampons enterrés il est fait appel à des matériaux alvéolaires verticaux juxtaposés réalisés en matière thermoplastique.

Ces matériaux alvéolaires sont combinés à des structures drainantes permettant la circulation horizontale des eaux, sous alvéoles, à savoir l'amenée et l'évacuation. Il est ainsi possible d'écrêter les excédents d'eau dus aux fortes pluies d'orage, sans qu'il soit nécessaire de surdimensionner les canalisations d'évacuation.

Le stockage des eaux, réalisé généralement sous ou à côté de la chaussée, demeure dans ce cas passif puisque les eaux sont soit progressivement infiltrées dans le sol, soit évacuées en l'état vers une station d'épuration.

Il s'avère que quel que soit le mode d'évacuation choisi, le problème du traitement anti-pollution des eaux pluviales est négligé ou mal envisagé car :
- dans le cas d'une évacuation par infiltration dans le sol, les eaux et les fines en suspension viennent progressivement polluer le terrain avoisinant le bassin, voire la nappe phréatique,
- dans le cas d'une évacuation vers une station d'épuration, la quantité importante d'eau à traiter risque d'engorger cette dernière.

Le bassin tampon enterré de stockage et de traitement des eaux pluviales suivant l'invention vise à remédier à ces différents inconvénients et permet de réaliser un stockage enterré avec traitement actif des eaux en vue de récupérer les fines en suspension qui fixent la majeure partie de la pollution de surface.

Le bassin objet de l'invention est caractérisé en ce qu'il comporte :
- un étage supérieur formé d'au moins une couche alvéolaire ou poreuse dite couche de stockage, entièrement recouverte de géotextile,
- au moins une structure drainante horizontale supérieure disposée sous la ou sous chaque couche alvéolaire ou poreuse de stockage,
- un étage inférieur formé d'au moins une couche alvéolaire ou poreuse dite couche de décantation, entièrement recouverte de géotextile, cet étage étant disposé sous la structure drainante supérieure immédiatement adjacente de la couche de stockage,
- au moins une structure drainante horizontale inférieure disposée sous la ou sous chaque couche alvéolaire de décantation.
- un double circuit d'évacuation, chaque circuit étant autonome et muni d'une vanne pour la vidange alternative et le remplissage des étages supérieurs et inférieurs.

Ainsi, conformément à l'invention, l'on évite que les particules fines en suspension dans les eaux de pluie ne soient réentrainées lors de la vidange progressive du bassin. Ces fines particules après passage avec les eaux chargées dans la couche de stockage, sont recueillies dans un étage de décantation qui n'est vidangé qu'une fois que la couche de stockage est vide. Il est bien entendu que pour favoriser la décantation souhaitée, il convient de donner une vitesse de circulation horizontale des eaux la plus faible possible.

L'invention sera mieux comprise à l'aide de la description qui suit d'un exemple non limitatif et de la figure représentant en coupe un mode d'exécution d'un tel bassin.

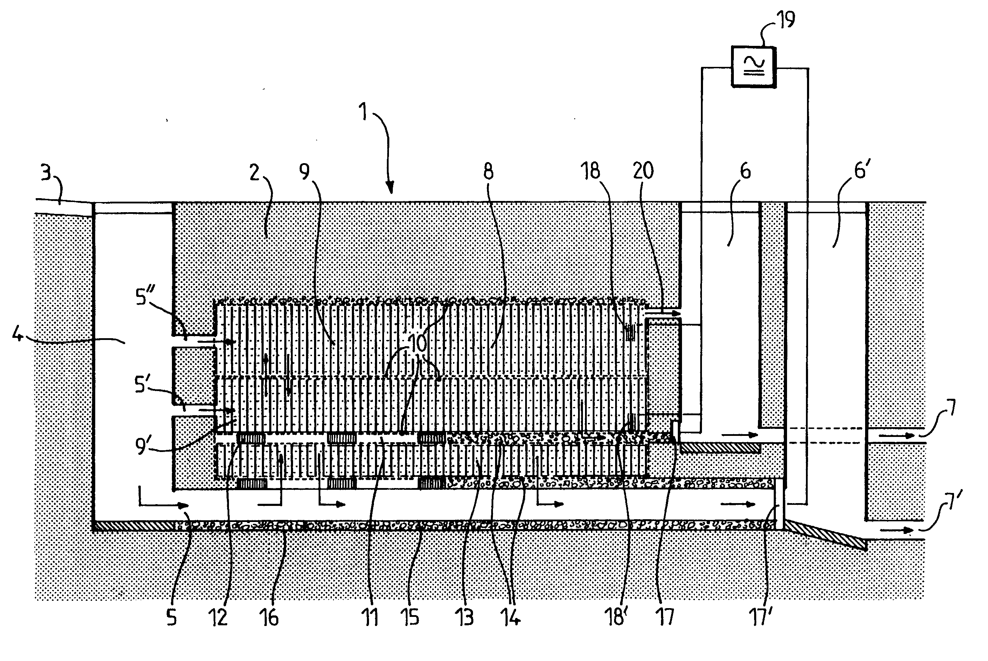

Comme représenté sur la figure 1, un bassin tampon 1 de stockage et de traitement des eaux pluviales a été enterré dans le sol 2, plus particulièrement sur le côté d'une chaussée 3. Il fait appel en amont à un puits d'amenée des eaux pluviales 4 muni de canalisations 5-5'-5" d'amenée des eaux sous les alvéoles, et en aval à deux regards de contrôle 6-6' traversés par l'une ou l'autre des canalisations 7-7' d'évacuation des eaux et des fines recueillies.

Le bassin proprement dit est composé d'une couche supérieure 8 de stockage de 150 cm environ en blocs de nid d'abeilles thermoplastique 9-9', en polypropylène dans le présent exemple. Les blocs de nid d'abeilles 9-9' sont disposés côte à côte et empilés éventuellement les uns sur les autres pour obtenir la hauteur souhaitée. Ils sont recouverts d'un géotextile 10 afin d'éviter la pénétration des terres ou graviers dans les alvéoles lors de la mise en oeuvre sous terre du bassin.

Ce dernier est composé ensuite d'une structure drainante horizontale supérieure 11 permettant l'alimentation et l'évacuation de la couche supérieure 8 et formée d'un géotextile à forte transmissivité, et/ou de graviers, et/ou de drains ou de canaux horizontaux, et/ou de plots 12 disposés sous la (ou chaque) couche 8.

Il comporte également en outre une couche inférieure 13 formée de 10 cm environ de blocs de nid d'abeilles en thermoplastique, en polypropylène dans le présent exemple.

Les blocs en nid d'abeilles sont disposés côte à côte. Ils sont recouverts d'un géotextile 14 afin d'éviter la pénétration des terres ou graviers dans les alvéoles lors de la mise en oeuvre sous terre du bassin.

Une structure drainante horizontale inférieure 15 formée d'un géotextile à forte transmissivité, et/ou de graviers et/ou de drains 5 ou de canaux horizontaux, et/ou de plots est disposée sous la couche inférieure 13 pour permettre l'alimentation en eau du bassin et l'évacuation de la dite couche inférieure. Cette structure drainante peut être doublée par un film d'étanchéité 16 du type géomembrane visant à éviter toute pollution du sous-sol adjacent.

Le bassin comprend enfin deux vannes 17-17' disposées en sortie du bassin 1 et régulant le remplissage du bassin ou sa vidange par l'intermédiaire des canalisations 7-7' d'évacuation des eaux et des fines recueillies.

Le système de déclenchement des vannes, non représenté sur la figure 1 est dans le présent exemple commandé électriquement par des sondes de niveau haut et bas 18-18' asservies à un boîtier de contrôle et de commande 19 qui autorise le fonctionnement quasi automatique du système. Toutefois le système pourrait être remplacé sans faire novation par tout système mécanique approprié de régulation.

Ainsi le mode de fonctionnement du bassin de stockage et de traitement des eaux pluviales est le suivant :

L'alimentation en eaux pluviales s'effectue en partie basse du bassin par la canalisation 5, et/ou en parties médianes par les canalisations 5-5" issues d'un puits latéral 4, ou par tout autre dispositif équivalent. L'eau s'écoule par le système de drainage 15 (canalisation 5 + cailloux grossiers) jusqu'à la vanne 17' qui est fermée. Elle monte donc dans les alvéoles de la couche de décantation 13, puis dans les couches supérieures de stockage 8, la vanne 17 étant également fermée. Par mesure de sécurité, il est conseillé de prévoir une évacuation haute 20 servant de trop plein en cas de montée trop rapide des eaux. Le trop-plein servira d'ailleurs en période normale d'évent pour la circulation de l'air inclus dans les alvéoles 9-9'.

Lorsqu'une certaine hauteur d'eau est atteinte, la sonde de niveau haut 18 la détecte et déclenche, après temporisation éventuelle, l'ouverture mécanique ou électronique de la vanne 17 ménagée dans le regard 6. Les eaux décantées se vident par la canalisation d'écoulement 7 vers le réseau public d'eaux pluviales. Une fois la couche supérieure de stockage vidée et la vanne 17 refermée mécaniquement ou électriquement grâce à l'impulsion de la sonde de niveau bas 18', les fines décantées dans la couche 13 en nid d'abeilles et dans le système d'alimentation-drainage 5-15 sont ensuite évacuées, grâce à l'ouverture mécanique ou électronique de la vanne 17' déclenchée par l'impulsion de la sonde de niveau bas 18', à travers le regard de contrôle 6' et par la canalisation 7' disposée en partie basse du bassin. Les fines sont ensuite récupérées par tout moyen approprié du type pompage ou raclage.

Les vannes 17-17' sont enfin refermées pour un nouveau cycle de traitement.

Bien entendu, l'on pourrait concevoir la régulation des vannes 17-17' avec un temporisation et en fonction de la vitesse de montée des eaux pour assurer un temps de décantation minimum et éviter l'entraînement des fines dans le réseau des eaux pluviales.

Par ailleurs, dans le présent exemple, les alvéoles des couches 8 et 13 sont orientées verticalement, mais l'on pourrait sans faire novation prévoir des alvéoles à mono ou multiorientation oblique pour améliorer les capacités de décantation du dispositif.

## Revendications

1. Bassin tampon (1) enterré de stockage et de traitement des eaux pluviales dont la partie supérieure est capable de supporter une charge et qui est raccordé à un réseau d'amenée et d'évacuation des eaux, **caractérisé en ce qu'**il comporte
- un étage supérieur (8) formé d'au moins une couche alvéolaire ou poreuse (9-9') dite couche de stockage, entièrement recouverte de géotextile (10),
- au moins une structure drainante horizontale supérieure (11) disposée sous la ou sous chaque couche alvéolaire ou poreuse (9-9') de stockage,
- un étage inférieur (13) formé d'au moins une couche alvéolaire ou poreuse dite couche de décantation, entièrement recouverte de géotextile (14), cet étage étant disposé sous la structure drainante supérieure (11) immédiatement adjacente de la couche de stockage (9-9'),
- au moins une structure drainante horizontale inférieure (15) disposée sous la ou sous chaque couche alvéolaire de décantation (13),
- un double circuit d'évacuation (7-7'), chaque circuit étant autonome et muni d'une vanne (17, 17') pour la vidange alternative et le remplissage des étages supérieur et inférieur (8, 13) du bassin.

2. Bassin tampon selon la revendication 1, **caractérisé en ce que** les couches de stockage (8) et de décantation (13) des eaux sont constituées d'alvéoles verticaux juxtaposés et préférentiellement en nid d'abeilles thermoplastique.

3. Bassin tampon selon la revendication 1, **caractérisé en ce que** les couches (8 et 13) sont constituées d'alvéoles à mono ou multirorientation oblique.

4. Bassin tampon selon la revendication 1, **caractérisé en ce que** les couches de stockage (8) et de décantation (13) des eaux pluviales sont entièrement recouvertes de géotextile.

5. Bassin tampon selon la revendication 4, **caractérisé en ce que** la structure drainante supérieure (11) est formée d'un géotextile à forte transmissivité, et/ou de graviers, et/ou de drains ou de canaux horizontaux, et/ou de plots (12) disposés sous la ou sous chaque couche (8) de stockage des eaux pluviales.

6. Bassin tampon selon la revendication 5, **caractérisé en ce que** la structure drainante inférieure (15) est formée d'un goétextile à forte transmissivité, et/ou de graviers, et/ou de drains (5) ou de canaux horizontaux, et/ou de plots disposés sous la couche de décantation (13) des eaux pluviales.

7. Bassin tampon selon la revendication 6, **caractérisé en ce que** la structure drainante inférieure (15) est doublée par un film d'étanchéité (16) du type géomembrane visant à éviter toute pollution du sous-sol adjacent.

8. Bassin tampon selon la revendication 7, **caractérisé en ce que** les vannes (17, 17') de vidange et de remplissage du bassin sont commandées par des dispositifs électroniques ou mécaniques déclenchés par des sondes de niveau haut (18) et bas (18') asservies à un boîtier de contrôle et de commande (19).

9. Bassin tampon selon la revendication 8 **caractérisé en ce qu'**une évacuation (20) est ménagée en partie haute de bassin pour la circulation de l'air dans les alvéoles (9,9') ou le trop plein éventuel des eaux du dispositif.

10. Bassin tampon selon l'une quelconque des revendications précédentes, **caractérisé en ce qu'**il comprend en amont un puits (4) muni d'au moins une canalisation (5-5'-5") d'amenée des eaux sous les alvéoles (9, 9') et en aval deux regards de contrôle (6,6') traversés par l'une ou l'autre des canalisations d'évacuation des eaux (7, 7').

## Patentansprüche

1. Ins Erdreich eingelassenes Rückhaltebecken (1) für die Speicherung und Behandlung von Niederschlagswasser, dessen oberer Teil eine Last tragen kann und das an ein Kanalnetz für Wasser angeschlossen ist, **dadurch gekennzeichnet, daß** es
- eine obere Stufe (8), gebildet aus mindestens einer als Speicherschicht bezeichneten zelligen oder porigen Schicht (9-9'), die vollständig mit einer Geotextilie (10) bedeckt ist,
- wenigstens eine obere horizontale Entwässerungsstruktur (11), die unter der/den zelligen oder porigen Speicherschicht/en (9-9') angeordnet ist,
- eine untere Stufe (13), gebildet aus mindestens einer als Klärschicht bezeichneten zelligen oder porigen Schicht, die vollständig mit einer Geotextilie (14) bedeckt ist, wobei diese Stufe unter der oberen Entwässerungsstruktur (11) angeordnet ist, die unmittelbar an die Speicherschicht (9-9') angrenzt,
- wenigstens eine untere horizontale Entwässerungsstruktur (15), die unter der/den zelligen Klärschicht/en (13) angeordnet ist, und
- eine doppelte Ableitung (7-7'), wobei jede Ableitung autonom und mit einem Ventil (17, 17') für das abwechselnde Entleeren und Füllen der oberen und unteren Stufe (8, 13) des Beckens ausgerüstet ist,
umfaßt.

2. Rückhaltebecken nach Anspruch 1, **dadurch gekennzeichnet, daß** die Speicher- (8) und die Klärschicht (13) für das Wasser aus nebeneinanderliegenden vertikalen Zellen und vorzugsweise aus einem Thermoplastschaum mit Wabenstruktur bestehen.

3. Rückhaltebecken nach Anspruch 1, **dadurch gekennzeichnet, daß** die Schichten (8 und 13) aus Zellen mit schräger Mono- oder Multiorientierung bestehen.

4. Rückhaltebecken nach Anspruch 1, **dadurch gekennzeichnet, daß** die Speicher- (8) und die Klärschicht (13) für Niederschlagswasser vollständig mit einer Geotextilie bedeckt sind.

5. Rückhaltebecken nach Anspruch 4, **dadurch gekennzeichnet, daß** die obere Entwässerungsstruktur (11) aus einer Geotextilie mit hoher Durchlässigkeit und/oder aus Kieselsteinen und/oder horizontalen Entwässerungsrohren bzw. Kanälen und/oder Zwischenlagen (12), die unter der/den Speicherschicht/en (8) für Niederschlagswasser angeordnet sind, gebildet ist.

6. Rückhaltebecken nach Anspruch 5, **dadurch gekennzeichnet, daß** die untere Entwässerungsstruktur (15) aus einer Geotextilie mit hoher Durchlässigkeit und/oder aus Kieselsteinen und/oder horizontalen Entwässerungsrohren (5) bzw. Kanälen und/oder Zwischenlagen, die unter der Klärschicht (13) für Niederschlagswasser angeordnet sind, gebildet ist.

7. Rückhaltebecken nach Anspruch 6, **dadurch gekennzeichnet, daß** die untere Entwässerungsstruktur (15) mit einer Dichtungsfolie (16) vom Typ einer Geomembran bedeckt ist, durch welche die Verunreinigung des darunterliegenden Erdreichs verhindert werden soll.

8. Rückhaltebecken nach Anspruch 7, **dadurch gekennzeichnet, daß** die Ventile (17, 17') für das Entleeren und Füllen des Beckens von elektronischen oder mechanischen Einrichtungen gesteuert werden, die durch Sonden für einen hohen (18) und einen niedrigen (18') Füllstand ausgelöst werden, die einen Steuer- und Schaltschrank (19) ansteuern.

9. Rückhaltebecken nach Anspruch 8, **dadurch gekennzeichnet, daß** im oberen Teil des Beckens eine Ableitung (20) für die Luftströmung durch die Zellen (9, 9') oder gegebenenfalls für den Überlauf des Wassers aus der Vorrichtung angebracht ist.

10. Rückhaltebecken nach einem der vorhergehenden Ansprüche, **dadurch gekennzeichnet, daß** es davor einen Schacht (4), der mit mindestens einer Rohrleitung (5-5'-5'') für die Zufuhr von Wasser unter die Zellen (9, 9') versehen ist, und danach zwei Kontrollschächte (6, 6'), durch welche jeweils eine von den beiden Ableitungen (7, 7') für Wasser führt, umfaßt.

## Claims

1. Buried buffer tank (1) for storage and treatment of rainwater, the upper part of which is capable of supporting a load and which is connected to a water feed and discharge network, **characterised in that** it has:
- an upper tier (8) formed from at least one cellular or porous layer (9-9') referred to as a storage layer, entirely covered with geotextile (10);
- at least one upper horizontal draining structure (11) disposed beneath the or each cellular or porous storage layer (9-9');
- a lower tier (13) formed from at least one cellular or porous layer referred to as a settling layer, entirely covered with geotextile (14), this tier being disposed beneath the upper draining structure (11) immediately adjacent to the storage layer (9-9');
- at least one lower horizontal draining structure (15) disposed beneath the or each cellular settling layer (13);
- a double discharge circuit (7-7'), each circuit being autonomous and provided with a valve (17, 17') for the alternate emptying and filling of the upper and lower tiers (8, 13) of the tank.

2. Buffer tank according to Claim 1, **characterised in that** the water storage (8) and settling (13) layers are composed of juxtaposed vertical cells and preferentially made of a thermoplastic honeycomb.

3. Buffer tank according to Claim 1, **characterised in that** the layers (8 and 13) are composed of cells with a single or multiple oblique orientation.

4. Buffer tank according to Claim 1, **characterised in that** the rainwater storage (8) and settling (13) layers are entirely covered with geotextile.

5. Buffer tank according to Claim 4, **characterised in that** the upper draining structure (11) is formed from a geotextile with a high transmissivity, and/or gravel, and/or horizontal channels or drains, and/or blocks (12) disposed beneath the or each rainwater storage layer (8).

6. Buffer tank according to Claim 5, **characterised in that** the lower draining structure (15) is formed from a geotextile with a high transmissivity, and/or gravel, and/or horizontal channels or drains (5), and/or blocks disposed beneath the rainwater settling layer (13).

7. Buffer tank according to Claim 6, **characterised in that** the lower draining structure (15) is backed by an impermeable film (16) of the geomembrane type intended to avoid any pollution of the adjacent subsoil.

8. Buffer tank according to Claim 7, **characterised in that** the valves (17, 17') for emptying and filling the tank are controlled by electronic or mechanical devices triggered by high level (18) and low level (18') probes interlocked with a monitoring and control box (19).

9. Buffer tank according to Claim 8, **characterised in that** an outlet (20) is provided in the top part of the tank for the circulation of air in the cells (9, 9') or any overflow of water from the device.

10. Buffer tank according to any one of the preceding claims, **characterised in that** it comprises, upstream, a shaft (4) provided with at least one duct (5-5'-5") for feeding water beneath the cells (9, 9') and, downstream, two inspection chambers (6, 6') cut through by one or other of the water discharge ducts (7, 7').
